# EUROPEAN PATENT APPLICATION

(11) **EP 4 585 048 A1**
(43) Date of publication of application: **16.07.2025**
(21) Application number: 24382017.2
(22) Date of filing: 10.01.2024
(51) Int. Cl.: A23G 7/02, A23N 12/08, A23N 15/06, A21B 1/48, F24C 15/32

(54) **FOOD PROCESSING APPARATUS**

(71) Applicant: Metalquimia, SAU, 17007 Girona (ES)
(72) Inventor: LAGARES GAMERO, Josep, 17850 Besalú (ES)
(74) Representative: Torner, Juncosa I Associats, SL

(57) **Abstract**

A food processing apparatus comprising a conveyor surface (10) comprising multiple loop sections (11) vertically overlapped defining interspaces in-between; a gas impulsion circuit (20) including multiple outer impulsion conduits (21A) and multiple inner impulsion conduits (21B), each with gas outlets (22) facing different interspaces between the overlapped loop sections (11); a gas return circuit (30) including multiple inner return conduits (31B), opposed to the outer impulsion circuits (21A), and multiple outer return conduits (31A) opposed to the inner impulsion conduits (21B), producing an inward gas flow in the interspaces, transversal to the conveyance path, in at least one first portion comprised between the outer impulsion conduits (21A) and the inner return conduits (31B), and producing an outward gas flow in the interspaces, transversal to the conveyance path, in at least one second portion comprised between the inner impulsion conduits (21B) and the outer return conduits (31A).

## Description

### Technical field

The present invention is directed towards a food processing apparatus adapted to transport a food product laying on a conveyor and to apply a gas flow of a treated gas on the food product while being conveyed, typically applying heated and dry air to dehydrate, cure or cook the food product, or a cooled air flow to cool down the food product or to freeze the food product.

### Background of the Invention

Food processing apparatus including a spiral conveyor surface, formed by overlapped loop sections, in association with a treated gas impulsion and return circuit to produce a gas flow on the food products transported on said conveyor surface are already known.

For example, documents US5942265 and US5702245 both describe similar food processing apparatus, where a gas flow is delivered on the food products in a vertical direction, affecting the food products unevenly and in an inefficient manner, requiring the gas flow to permeate through all the overlapped loop sections of the conveyor surface.

Document EP0528593 describes a similar apparatus for steam cooking. In this case, the gas flow is provided in a radial direction, from different impulsion conduits surrounding the processing region, but in this case the food products transported in the outer perimeter and in the inner perimeter of the conveyor surface will be unevenly processed.

Document EP0953286 also describes an apparatus of this kind, wherein the air flow is ejected horizontally from the inside of the processing region, but only on one side thereof, and is suctioned from an opposed side of the processing region, causing the air flow to travel upstream on one side of the processing region and downstream to the other side thereof. The air flow being blown always from the inner core of the processing region produces an uneven treatment of the food products placed in the inner edge of the conveyor in comparison with the food products conveyed in the outer edge thereof. This document proposes the use of two processing regions with opposed rotational directions to mitigate this problem, but the uneven treatment of the food product produced in the initial stage of the processing cannot be compensated in later stages of the treatment, when the initial treatment unevenly applied has been completed.

The present invention solves the above and other problems.

### Description of the Invention

The present invention concerns to a food processing apparatus, as defined in claim 1.

The proposed food processing apparatus comprises:
a conveyor surface movable along a conveyance path adapted for supporting food products to be processed lying thereon, the conveyor surface including a processing region comprising multiple loop sections vertically overlapped and vertically spaced defining interspaces between the overlapped loop sections;
a gas impulsion circuit including multiple impulsion conduits, each with gas outlets facing different interspaces between the overlapped loop sections, the impulsion conduits including multiple outer impulsion conduits, arranged around the processing region of the conveyor surface;
a gas return circuit including multiple return conduits, each with gas inlets, the return conduits including multiple inner return conduits contained in an inner space surrounded by the processing region in opposition with the outer impulsion conduits, producing between them an inward gas flow transversal to the conveyance path in the interspaces in at least one first portion of the processing region; and
at least one gas treatment unit with a gas outlet connected to the gas impulsion circuit and with a gas inlet connected to the gas return circuit;

The conveyor surface defines a surface on which the food products can lie flat while being transported along the conveyance path. This conveyor surface can be inclined and curved to define slopes and turns along the conveyance path.

Typically said conveyor surface is a wide chain with connected links, frequently forming an open mesh permeable to the air, and wide enough to include several rows of food product parallel to the conveyance path to increase the productivity of the apparatus.

The food product are typically food slices, or small food pieces under 1 cm thick, but food products with other formats are also considered.

The conveyor surface includes multiple loop sections, each forming one loop with a start and an end at different heights, one above the other, forming a loop on slope or a loop with at least one sloped segment between the stard and the end.

Each of successive loop sections, for example identical loop sections, has its start connected to the end of a preceding loop section, forming a succession of overlapped loop sections, each one being placed above the preceding one, defining an interspace between the conveyor surface of one loop section and the underside of the loop section placed above it, the food product being conveyed through said interspace. The inverse construction is also possible, with each loop section having its start above its end so that, once connected in succession, forming a succession of loop sections where each loop section is below the preceding one.

According to one embodiment, each loop section is circular, the overlapped loop sections defining an helicoidal conveyance path. According to an alternative embodiment, each loop section comprises two semicircular sections connected through two interposed straight sections.

The conveyor surface is moved forwards by a conveyor driver device, for example through an electric motor engaging with the conveyor surface through a chain or wheels. In the preferred embodiment, the conveyor surface is a chain which defines, at its two opposed lateral edges parallel to the conveyance path, an engagement configuration complementary with a driver wheel connected to the electric motor though an axis. The conveyor surface may be engaged with the electric motor through wheels at least once on each loop section.

At least some portions of the interspaces between the overlapped loop sections are adjacent to the gas outlets of the impulsion conduits of the gas impulsion circuit.

The gas impulsion circuit is connected to a gas outlet of at least one gas treatment unit, typically an over-pressured gas outlet, and the gas return circuit is connected to a gas inlet of the at least one gas treatment unit, typically an under-pressurized. Though this, a stream of gas, treated by the gas treatment unit, is propelled through the gas impulsion circuit, and ejected through the gas outlets, and later suctioned by the gas inlets to return to the gas treatment unit, generating the gas flow between the facing gas outlets and gas inlets.

Some of the impulsion conduits are located around the processing region, with the corresponding gas outlets facing inwards towards the interspaces of at least one first portion of the processing region.

Corresponding inner return conduits are located inside a central hollow space surrounded by the processing region, producing an inward gas flow through the interspaces contained in said at least one first portion of the processing region from the exterior of the processing region, where the gas flow is ejected from the outer impulsion conduits, towards the interior of the processing region, where the inner return conduits suction such gas flow.

The food products closer to the gas outlets will be more effectively treated by the gas flow than those food products away from the gas outlets, resulting in an uneven treatment of the food products.

Therefore, according to the proposed invention, the impulsion conduits further comprise multiple inner impulsion conduits, contained in the inner space surrounded by the processing region, with the correspondent gas outlets facing outwards towards the surrounding interspaces, and corresponding multiple outer return conduits will be arranged around the processing region, preferably facing the inner impulsion conduits, producing an outward gas flow through the interspaces in at least one second portion of each loop section faced by the gas outlets of the inner impulsion conduits.

According to the above, the apparatus contains impulsion conduits not only around the processing region facing at least one first portion of the processing region, but also contained in the inner space surrounded by the processing region, facing at least one second portions of the processing region, different to the at least one first portions described above. In this manner, during its transport through the conveyance path, the food products will be subjected to an inward gas flow when transiting through the first portions of the processing region and to an outward gas flow when transiting through the second portions of the processing region, producing a more homogeneous treatment of the food products.

In other words, the proposed invention is a food processing apparatus comprising a conveyor surface comprising multiple loop sections vertically overlapped defining interspaces in-between; a gas impulsion circuit including multiple outer impulsion conduits and multiple inner impulsion conduits, each with gas outlets facing different interspaces between the overlapped loop sections; a gas return circuit including multiple inner return conduits, opposed to the outer impulsion circuits, and multiple outer return conduits opposed to the inner impulsion conduits, producing an inward gas flow in the interspaces, transversal to the conveyance path, in at least one first portion comprised between the outer impulsion conduits and the inner return conduits, and producing an outward gas flow in the interspaces, transversal to the conveyance path, in at least one second portion comprised between the inner impulsion conduits and the outer return conduits.

Preferably, the processing region of the conveyor surface, and the surrounding impulsion conduits and return conduits, are contained in a housing, separating the air present within the housing from the ambient air surrounding the housing, so that the gas flow provided by the gas impulsion circuit can modify the properties of the air contained in the housing, for example increasing or reducing its temperature or moisture content.

The apparatus may contain several housings, separated to each other, allowing for the creation of different air conditions on each housing, the conveyor surface passing from one housing to the other housing. This allows the treatment of the food products with different air conditions.

It will be understood that references to geometric position, such as parallel, perpendicular, tangent, etc. allow deviations up to ± 5° from the theoretical position defined by this nomenclature.

### Brief description of the Figures

The foregoing and other advantages and features will be more fully understood from the following detailed description of an embodiment with reference to the accompanying drawings, to be taken in an illustrative and non-limitative manner, in which:

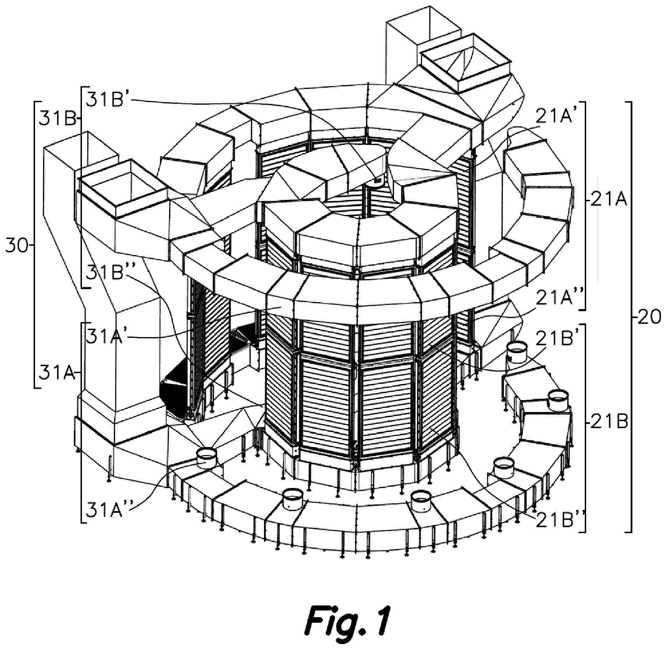

Fig. 1 shows a perspective view of the apparatus according to a fist embodiment, this view not showing the housing nor the conveyor surface for clarity reasons.
Fig. 2 shows a top view the apparatus through a horizontal section, showing the bottom half of the apparatus shown on Fig. 1, this time including the conveyor surface entering in the apparatus through its lower end and at least one ascending loop section thereof rotating in a counterclockwise direction, the inward gas flow and the outward gas flow being indicated by arrows.
Fig. 3 shows a lateral view of the apparatus shown in Fig. 1 including the conveyor surface.
Fig. 4 shows a perspective view of only the manifolds of the lower end of the apparatus shown in Fig. 1.
Fig. 5 shows a perspective view of one of the impulsion conduits according to an embodiment in which one main surface is a rigid surface including multiple parallel slits as gas outlets, each slit being parallel to one conveyor surface defining the interspace faced by said slit.
Fig. 6 shows a vertical cross section of the impulsion conduit shown in Fig. 5, another main surface, opposed to the rigid main surface including the gas outlets, is a flexible main surface.
Fig. 7 shows a horizontal cross section of the impulsion conduit shown in Fig. 6 in a maintenance position in which the flexible main surface has been removed from the impulsion conduit for maintenance and cleaning, and in which the rigid main surface is hinged to the rest of the impulsion conduit and is open for maintenance and cleaning operations.
Fig. 8 shows the same horizontal cross section shown in Fig. 7, but in an operational position.

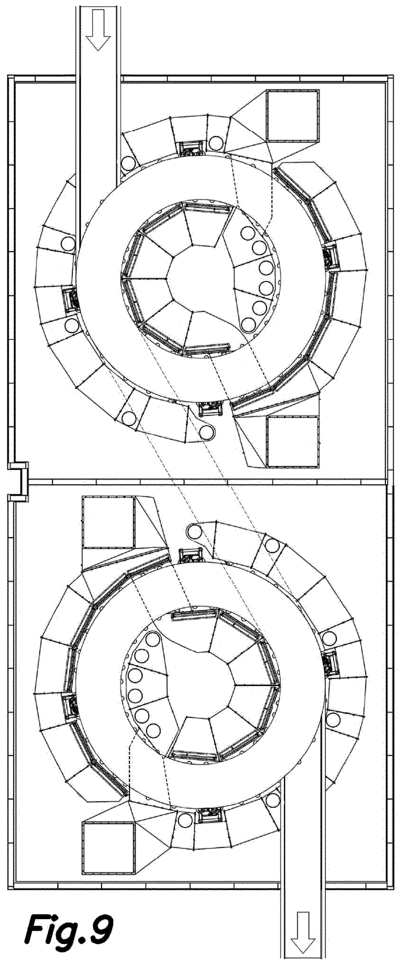

Fig. 9 shows an horizontal cross section of the apparatus according to an embodiment in which the apparatus includes a first processing region, defined by overlapped ascending loop sections rotating counterclockwise, and also including a second processing region, defined by overlapped descending loop sections rotating clockwise, the conveyor surface being a continuous conveyor surface entering the apparatus from the bottom of the first processing region, exiting the apparatus through the bottom of the second processing region and the first and second processing regions being connected through the upper end thereof.

### Detailed Description of the Invention and of particular embodiments

According to a preferred embodiment of the present invention, the food processing apparatus comprises a conveyor surface 10 adapted for movable though a conveyance path for carrying food products lying thereon along said conveyance path.

The food products can be, for example, slices or pieces of meat, sausages, vegetal, fruits, bakery, vegan meat, or others.

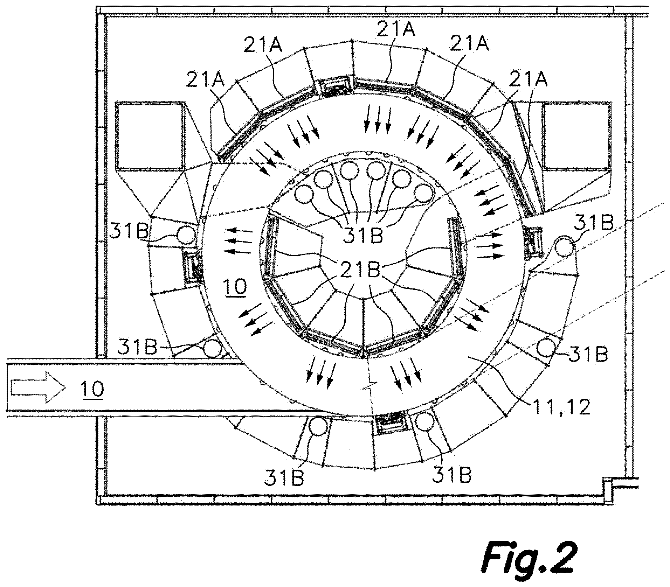

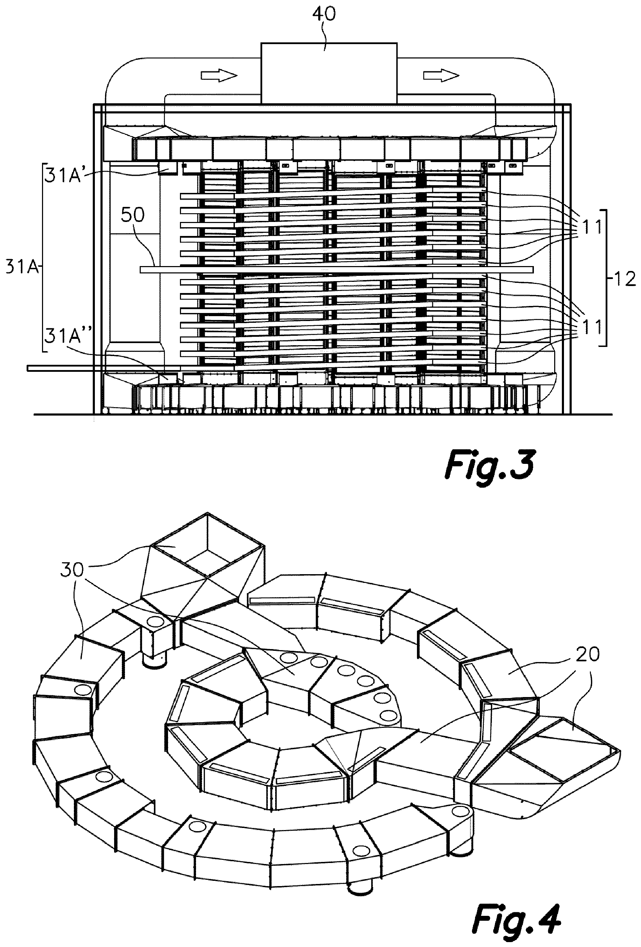

The conveyor surface 10 includes multiple successive loop sections 11 vertically overlapped defining interspaces there between, for example circular loop sections 11 forming an helicoidal conveyance path as shown in Fig. 2 and 3, or multiple loop sections 11 defined by two semicircular portions connected through two straight portions, forming an elongated loop section 11. Those overlapped loop sections 11 including interspaces there between define a processing region 12 of the conveyor surface. The apparatus may include one or several processing regions. For example, in the embodiment shown in Fig. 9 the apparatus includes two consecutive processing regions with a single conveyor surface passing through both processing regions 12.

The food processing apparatus further comprises a forced gas distribution system including a gas impulsion circuit 20 and a gas return circuit 30.

The gas impulsion circuit 20 is connected to an over-pressured gas outlet of a gas treatment unit 40, and the gas return circuit 30 is connected to an under-pressurized gas inlet of the gas treatment unit 40, producing a stream of gas treated by the gas treatment unit.

According to a preferred embodiment, the inner return conduits 31B are housed in the inner space surrounded by the processing region 12, adjacent to the first portions of the processing region 12, and the outer return conduits 31A are surrounding the processing region 12, adjacent to the second portions of the processing region 12.

According to one embodiment of the invention, the inner return conduits 31B may extends vertically, facing the interspaces of the at least one first portion of the processing region 12, and the outer return conduits 31A may extend vertically, facing the interspaces of the at least one first portion of the processing region 12. In this case, the gas inlets 32 of the inner return conduits 31B are preferably facing outwards towards the interspaces of the at least one first portion of the processing region 12, preferably in opposition with the gas outlets 22 of the outer impulsion conduits 21A producing an inward gas flow, transversal to the conveyance path, in the interspaces in the at least one first portion of the processing region 12.

Also, the gas inlets 32 of the outer return conduits 31B can be facing inwards towards the interspaces of the at least one second portion of the processing region 12, preferably in opposition with the gas outlets 22 of the inner impulsion conduits 21A producing an outward gas flow, transversal to the conveyance path, in the interspaces in at least one second portion of the processing region 12.

The inward and outward gas flows are indicated in Fig. 2 by arrows.

The gas treatment unit may include, for example, a gas heater, a gas cooler, a gas dryer, a gas humidifier, a gas heat exchanger, a smoke generator or any combination thereof, so it can produce a stream of gas, preferably air, with a controlled temperature and moisture content above the temperature and moisture content of the ambient air to heat, dehydrate or cook the food products, or below it to cool down or freeze the food products. It can also optionally add smoke to the treated gas, producing smoke-taste to the treated food products, and can use a heat exchanger to recover part of the thermal energy contained in the gas recovered through the gas inlet of the gas treatment unit 40 heating or cooling the gas to be propelled through the gas outlet of the gas treatment unit 40 reducing the overall energy consumption.

The gas impulsion circuit 20 includes multiple impulsion conduits 21A, 21B with gas outlets 22 facing different interspaces between overlapped loop sections 11 to blow air therein transverse to the conveyance path.

Some of the impulsion conduits 21A, 21B are outer impulsion conduits 21A arranged around the processing region 12, and some are inner impulsion conduits 21B contained in the inner space surrounded by processing region 12. Also, some of the return conduits 31A, 31B are outer return conduits 31A arranged around the processing region 12, and some are inner return conduits 31B contained in the inner space surrounded by processing region 12.

The outer impulsion conduits 21A, which are placed around the processing region 12, are adjacent to at least one first portion of the processing region 12 and have their gas outlets facing inwards towards the interspaces contained in said at least one first portion of the processing region, accessible through an outer lateral access defined between the outer edges of the overlapped loop sections.

Correspondent inner return conduits 31B, which are contained in the inner space surrounded by the processing region 12, are also adjacent to the above mentioned at least one first portion of the processing region 12 and have their correspondent gas inlets facing outwards towards the interspaces of said at least one first portion of the processing region, which are accessible through an inner lateral access defined between the inner edges of the overlapped loop sections. Preferably, the gas inlets are facing at least some gas outlets of the outer impulsion conduits 21A, producing an inward gas flow in the interspaces of the at least one first portion of the processing region 12 contained between the outer impulsion conduits 21A and the inner return conduits 31B.

Similarly, the inner impulsion conduits 21B, which are contained in the inner space surrounded by the processing region 12, are adjacent to at least one second portion of the processing region 12 different to the at least one first portion, and have their correspondent gas outlets facing outwards towards the interspaces of said at least one second portion of the processing region 12, which are accessible through an inner lateral access defined between the inner edges of the overlapped loop sections 11.

Correspondent inner impulsion conduits 31A, which are placed around the processing region 12, are also adjacent to the above mentioned at least one second portion of the processing region 12 and have their gas inlets facing inwards towards the interspaces contained in said at least one second portion of the processing region 12, which are accessible through an outer lateral access defined between the outer edges of the overlapped loop sections.

Preferably, the gas inlets are facing at least some gas outlets of the inner impulsion conduits 21B, producing an outward gas flow in the interspaces of the at least one second portion of the processing region 12 contained between the inner impulsion conduits 21B and the outer return conduits 31A.

Preferably, the gas outlets 22 of the outer impulsion conduits 21A and the gas outlets 22 of the inner impulsion conduits 21B are not facing to each other to prevent turbulences in the interspaces, which will reduce the efficiency of the gas treatment.

Each first portion of the processing region 12 includes an outer face containing lateral access to multiple interspaces of several overlapped loop sections 11, said lateral access being defined between outer lateral edges of the overlapped loop sections 11, the outer face being typically a vertical face of the processing region 12.

Similarly, each first portion of the processing region 12 includes also an inner face containing lateral access to multiple interspaces of several overlapped loop sections 11, said lateral access being defined between inner lateral edges of the overlapped loop sections 11, the inner face being typically a vertical face of the processing region 12.

The at least one second portion of the processing region 12 also includes an outer face and an inner face equivalent to those of the first portions.

According to one embodiment of the present invention, the outer face of each first portion of the processing region 12 is mostly covered by outer impulsion conduits 21A grouped adjacent to each other to produce a uniform inward gas flow in the first portion of the processing region 12, and the inner face of each second portion of the processing region 12 is mostly covered by inner impulsion conduits 21B grouped adjacent to each other to produce a uniform outwards gas flow in the second portion of the processing region 12.

According to the above, the outer face of each first portion is facing a group of outer impulsion conduits 21A adjacent to each other, said group covering most of the outer face in a direction perpendicular to said outer face, i.e. covering more than 50% of the outer face, and preferably more than 75% or more than 90% of the outer face, so that the gas outlets of the group of outer impulsion conduits 21A facing each interspace are almost evenly distributed along each outer face producing a uniform inward gas flow along each first portion.

In a similar manner, the inner face of each second portion is facing a group of inner impulsion conduits 21B adjacent to each other, said group covering most of the inner face in a direction perpendicular to said inner face, i.e. covering more than 50% of the inner face, and preferably more than 75% or more than 90% of the inner face, so that the gas outlets of the group of inner impulsion conduits 21B facing each interspace are almost evenly distributed along each inner face producing a uniform outward gas flow along each second portion.

According to this embodiment, several adjacent outer impulsion conduits 21A constitute an outer group A which provides a uniform inward gas flow through the interspace of a first portion of the loop sections 11, and several adjacent inner impulsion conduits 21B constitute an inner group B which provides a uniform outward gas flow through the interspace of a second portion of the loop sections 11.

Each loop section 11 can include one or several consecutive outer groups A, and one or several inner groups B, or can include several alternating outer and inner groups A and B.

One single outer or inner impulsion conduit can constitute one outer or inner group, but at least one of the outer or inner groups is formed by several adjacent outer or inner impulsion conduits.

The first and second regions can constitute all the processing region, but optionally the processing region can further include some third regions devoid of outer or inner impulsion conduits facing it but said third regions will constitute a minor portion of the processing region, preferably less than 15% or 10% thereof.

According to the preferred embodiment shown in the figures, the proposed apparatus includes two consecutive outer groups A, one constituted by two adjacent outer impulsion conduits 21A and one constituted by four adjacent outer impulsion conduits 21A. The apparatus shown in the preferred embodiment further includes only one inner groups B constituted by six consecutive inner impulsion conduits 21B.

The combined longitude of an outer edge of the loop sections contained in the first portions of the processing region 12, facing the outer impulsion sections 21A, is approximately equal to the combined longitude of inner edges of the loop sections 11 contained in the second portions of the processing region 12, facing the inner impulsion sections 21B.

It will be understood that, in this context, longitudes with a variation of ±5% will be considered to be of the approximately the same longitude.

In other words, the outer faces of all the first portions of the processing region 12, mostly covered by the outer impulsion conduits 21A, may have a combined horizontal longitude approximately equal to the combined horizontal longitude of the inner faces of all the second portions of the processing region (12), mostly covered by the inner impulsion conduits (21B).

The horizontal longitude of the outer faces is the combined longitude, measured in a horizontal plane, of the outer face of all the first regions. Thise measure is coincident with the longitude, in said horizontal plane, of one outer edge of one loop section contained in said first regions. The same applies to the horizontal longitude of the inner faces.

Because of its geometry, the conveyor surface 10 of each loop section 11, and the interspace defined above it, has an outer edge longer than its inner edge. In order to ensure a homogeneous treatment of the food product transported on the conveyor surface, the longitude of the outer edge faced by the outer impulsion conduits 21A and the longitude of the inner edge faced by the inner impulsion conduits 21B shall be approximately the same.

Preferably the size and gas outlet distribution of all the inner and outer impulsion conduits is the same, and the number of inner impulsion conduits is the same than the number of outer impulsion conduits.

According to one embodiment, the impulsion conduits 21A, 21B are flattened conduits with two opposed main surfaces, one of said main surfaces containing the gas outlets 22 and facing the interspaces between the overlapped loop sections 11. This flattened shape maximizes the surface facing the interspaces between the overlapped loop sections 11 distributing the gas outlets in a wider area to achieve a more uniform gas flow.

The gas outlets 22 can be, for example, one elongated opening or one elongated succession of openings for each interspace between two successive loop sections 11, to produce a planar gas flow. Said elongated opening or elongated succession of openings is parallel to the conveyor surface of the interspaces faced by said gas outlets 22, so that the planar gas flow produced by said elongated opening or elongated succession of openings is parallel to the conveyor surface, producing a homogeneous treatment of the food products laying thereon.

According to this, if the conveyor surface, in the processing region, is in slope and the one elongated opening or the one elongated succession of openings are also in slope to produce a planar gas flow parallel to the conveyor surface.

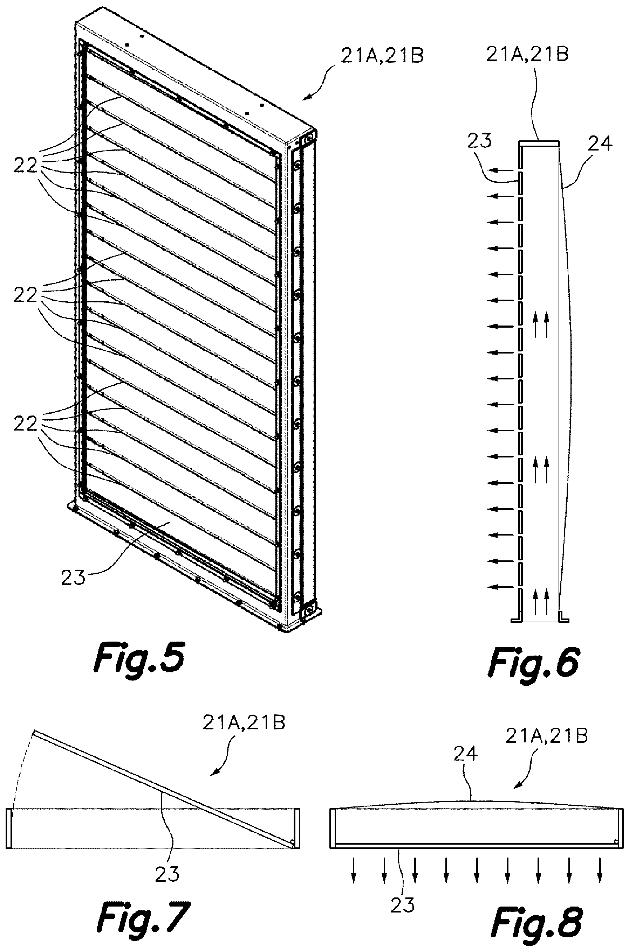

Preferably, the main surface of the impulsion conduits 21A, 21B containing the gas outlets 22 is a rigid main surface 23 and the opposed main surface is a flexible main surface 24, as shown in Figs. 6, 7 and 8.

To obtain uniform treatment of the food product, the air flow blown through all the gas outlets must be completely uniform over the entire height of the overlapped loop sections 11.

An air flow moving along a rigid conduit suffers a pressure drop, causing a differential in the air flow blown through gas outlets placed at different positions along the conduit, which would cause uneven treatment of the food product.

The use of a flexible conduit, for example made wholly or partially of an air-impermeable textile material, solves this problem because such a flexible conduit has a pulmonary effect, adapting the shape of the conduit to achieve a uniform internal pressure, producing a uniform gas flow through all the gas outlets.

It is also necessary to ensure that the gas outlets are evenly distributed and properly directed to generate uniform airflow on the food product transported through the loop sections of the conveyor surface. This can be a challenge in a flexible conduit.

It is therefore proposed to make each impulsion conduit from a rigid portion, constitutive of at least one main surface of the impulsion conduit 21 containing the gas outlets, and a flexible portion constitutive of at least a portion of the other main surface of the impulsion conduit, the rigid portion and the flexible portion being joined by their edges.

According to the preferred embodiment, not only the main surface, but also lateral surfaces connecting both main surfaces are rigid, only the other main surface or a portion thereof being flexible.

Because the gas outlets are defined in the rigid portion, the position, size and direction of those gas outlets are perfectly defined assuring a uniform air flow, and the flexible portion assures a uniform pressure in each gas outlet.

It is also proposed the flexible portion to be removably attached to the rest of the conduit, i.e. to the rigid portion, by means of releasable connections, such as zippers, Velcro or magnets.

The releasable connection between the flexible portion and the rigid portion allows for easy removal and easy access to the interior of the impulsion conduits 21A, 21B for cleaning operations.

It is also proposed, as an optional feature, the rigid main surface of the impulsion conduits 21A, 21B including the gas outlets 22 to be removably attached or hinged to the rest of the impulsion conduit 21, allowing an easy removal or opening from behind, away from the overlapped loop sections 11, once the flexible portion has been removed speeding up the cleaning operations.

Preferably, the proposed apparatus includes at least one walk-on maintenance platform 50 surrounding at least a portion of the processing region around at least the outer impulsion conduits 21A, adjacent thereto, facilitating an easy access for maintenance, inspection, and cleaning operations. Also, the apparatus may further include at least one walk-on maintenance platform 50, contained in the surrounded by the processing region 12, surrounded by at least the inner impulsion conduits 21B, also adjacent thereto, facilitating an easy access for maintenance, inspection, and cleaning operations of the inner impulsion conduits 21B.

Each walk-on maintenance platform is accessible to an operator through a stair. The walk-on maintenance platforms 50 surrounded by the overlapped loop sections 11 can be accessed from above or from below the overlapped loop sections.

Preferably, such walk-on maintenance platforms are also contained within the housing containing the processing region of the conveyor surface and the impulsion conduits and return conduits.

According to one embodiment of the present invention, the gas impulsion circuit 20 has an upper portion and a lower portion, wherein the outer impulsion conduits 21A comprise:
upper outer impulsion conduits 21A', connected to the upper portion of the gas impulsion circuit 20, arranged around an upper halve of the processing region 12 and facing the interspaces contained in the at least one first region of the upper halve of the processing region 12; and
lower outer impulsion conduits 21A" connected to the lower portion of the gas impulsion circuit 20, arranged around a lower halve of the processing region 12 and facing the interspaces contained in the at least one first region of the lower halve of the processing region 12; and wherein
the inner impulsion conduits 21B comprise:
upper inner impulsion conduits 21B', connected to the upper portion of the gas impulsion circuit 20, contained in a hollow space surrounded by an upper halve of the processing region 12 and facing the interspaces contained in the at least one second region of the upper halve of the processing region 12; and
lower inner impulsion conduits 21B", connected to the lower portion of the gas impulsion circuit 20, contained in a hollow space surrounded by a lower halve of the processing region 12 and facing the interspaces contained in the at least one second region of the lower halve of the processing region 12.

According to this, the approximately halve of the total number of loop sections 11 overlapped, closer to the bottom of the processing region 12, are served with gas flow by the lower portion of the gas impulsion circuit 20, and the remaining number of loop sections 11 overlapped, closer to the top of the processing region 12, are served with gas flow by the upper portion of the gas impulsion circuit 20.

Both upper and lower portions of the gas impulsion circuit can be connected to the same gas treatment unit 40, or each to one independent gas treatment unit 40, and can deliver a gas flow with the same properties, such temperature, moisture content and/or speed, or can be adjusted to deliver different gas treatments through the upper portion and lower portion of the gas impulsion circuit 20.

In a similar manner, the gas return circuit 30 may include an upper portion and a lower portion, the outer return conduits 31A comprising:
upper outer return conduits 31A', connected to the upper portion of the gas return circuit 30, arranged around the upper halve of the processing region 12 and facing the interspaces contained in the at least one second region of the upper halve of the processing region 12; and
lower outer return conduits 31A", connected to the lower portion of the gas return circuit 30, arranged around the lower halve of the processing region 12 and facing the interspaces contained in the at least one second region of the lower halve of the processing region 12; and
the inner return conduits 31B comprise:
upper inner return conduits 31B', connected to the lower portion of the gas return circuit 30, contained in a hollow space surrounded by the upper halve of the processing region 12 and facing the interspaces contained in the at least one first region of the upper halve of the processing region 12; and
lower outer return conduits 31B", connected to the lower portion of the gas return circuit 30 contained in a hollow space surrounded by the lower halve of the processing region 12 and facing the interspaces contained in the at least one first region of the lower halve of the processing region 12.

The upper outer impulsion conduits 21A' and the upper inner impulsion conduits 21B' can be connected to the upper portion of the gas impulsion circuit 20 through an upper impulsion manifold located above the processing region 12, bridging between the hollow space surrounded by the processing region 12 and the space surrounding the processing region above the processing region 12.

Similarly, the lower outer impulsion conduits 21A" and the lower inner impulsion conduits 21B" can be connected to the lower portion of the gas impulsion circuit 20 through a lower impulsion manifold located below the processing region 12, bridging between the hollow space surrounded by the processing region 12 and the space surrounding the processing region below the processing region 12.

The upper outer return conduits 31A' and the upper inner return conduits 31B' can be connected to the upper portion of the gas return circuit 30 through an upper return manifold located above the processing region 12, bridging between the hollow space surrounded by the processing region 12 and the space surrounding the processing region above the processing region 12.

The lower outer return conduits 31A" and the lower inner return conduits 31B" may also be connected to the lower portion of the gas return circuit 20 through a lower return manifold located below the processing region 12, bridging between the hollow space surrounded by the processing region 12 and the space surrounding the processing region below the processing region 12.

The gas treatment unit can include, for example, a gas heater, a gas cooler, a gas dryer, a gas humidifier, a gas heat exchanger, a smoke generator or any combination thereof.

Said gas treatment unit can be located above the processing region 12, for example in an upper floor of the facility containing the proposed food processing apparatus. Despite the above, other locations are also possible, such below the processing region 12, for example in a lower floor of the facility containing the proposed food processing apparatus, or on a side thereof.

## Claims

1. A food processing apparatus comprising:
a conveyor surface (10) movable along a conveyance path adapted for supporting food products to be processed lying thereon, the conveyor surface (10) defining a processing region (12) comprising multiple loop sections (11) vertically overlapped and vertically spaced defining interspaces between the overlapped loop sections (11);
a gas impulsion circuit (20) including multiple impulsion conduits (21A, 21B), each with gas outlets (22) facing different interspaces between the overlapped loop sections (11), the impulsion conduits (21A, 21B) including multiple outer impulsion conduits (21A), arranged around the processing region (12) of the conveyor surface (10);
a gas return circuit (30) including multiple return conduits (31A, 31B), each with gas inlets (32), the return conduits (31A, 31B) including multiple inner return conduits (31B) contained in an inner space surrounded by the processing region (12) in opposition with the outer impulsion conduits (21A), producing between them an inward gas flow transversal to the conveyance path in the interspaces in at least one first portion of the processing region (12); and
at least one gas treatment unit (40) with a gas outlet connected to the gas impulsion circuit (20) and with a gas inlet connected to the gas return circuit (30);
**characterized in that**
the impulsion conduits (21A, 21B) further comprise multiple inner impulsion conduits (21B), contained in the inner space surrounded by the processing region (12) of the conveyor surface (10), and multiple outer return conduits (31A) arranged around the overlapped loop sections (11) in opposition with the inner impulsion conduits (21A), producing between them an outward gas flow transversal to the conveyance path in said interspaces in at least one second portion of the processing region (12).

2. The apparatus according to claim 1 wherein an outer face of each first portion of the processing region (12), containing lateral access to multiple interspaces of several overlapped loop sections (11), is mostly covered by outer impulsion conduits (21A) grouped adjacent to each other to produce a uniform inward gas flow in the first portion of the processing region (12), and an inner face of each second portion of the processing region (12), containing lateral access to multiple interspaces of several overlapped loop sections (11), is mostly covered by inner impulsion conduits (21B) grouped adjacent to each other to produce a uniform outwards gas flow in the second portion of the processing region (12).

3. The apparatus according to claim 1 or 2 wherein the combined longitude of an outer edge of the loop sections (11) contained in the first portions of the processing region (12), facing the outer impulsion conduits (21A), is approximately equal to the combined longitude of inner edges of the loop sections (11) contained in the second portions of the processing region (12), facing the inner impulsion conduits (21B).

4. The apparatus according to claim 1, 2 or 3 wherein the impulsion conduits (21A, 21B) are flattened conduits with two opposed main surfaces, one of said main surfaces containing the gas outlets (22).

5. The apparatus according to claim 4 wherein the gas outlets (22) are one elongated opening or one elongated succession of openings for each interspace between two successive loop sections (11), each opening or elongated succession of openings being defined along a line parallel to the conveyor surface of the interspace faced by said gas outlets (22).

6. The apparatus according to claim 4 or 5 wherein the main surface of the impulsion conduits (21A, 21B) containing the gas outlets (22) is a rigid main surface (23) and the opposed main surface is a flexible main surface (24).

7. The apparatus according to claim 6 wherein the flexible main surface (24) of the impulsion conduits (21A, 21B) is removably attached to the rest of the of the impulsion conduits (21A, 21B).

8. The apparatus according to claim 7 wherein the rigid main surface (23) of the impulsion conduits (21A, 21B) including the gas outlets (22) is removably attached or hinged to the rest of the impulsion conduit (21).

9. The apparatus according to any preceding claim wherein the apparatus includes at least one walk-on maintenance platform (50) surrounding at least a portion of the processing region around at least the outer impulsion conduits (21A), and wherein the apparatus further includes at least one walk-on maintenance platform (50), contained in the surrounded by the processing region (12), surrounded by at least the inner impulsion conduits (21B).

10. The apparatus according to any preceding claim wherein the gas impulsion circuit (20) has an upper portion and a lower portion, and wherein the outer impulsion conduits (21A) comprise:
upper outer impulsion conduits (21A'), connected to the upper portion of the gas impulsion circuit (20), arranged around an upper halve of the processing region (12); and
lower outer impulsion conduits (21A") connected to the lower portion of the gas impulsion circuit (20), arranged around a lower halve of the processing region (12); and wherein
the inner impulsion conduits (21B) comprise:
upper inner impulsion conduits (21B'), connected to the upper portion of the gas impulsion circuit (20), contained in a hollow space surrounded by an upper halve of the processing region (12); and
lower inner impulsion conduits (21B"), connected to the lower portion of the gas impulsion circuit (20), contained in a hollow space surrounded by a lower halve of the processing region (12).

11. The apparatus according to claim 10 wherein the gas return circuit (30) has an upper portion and a lower portion, wherein the outer return conduits (31A) comprise:
upper outer return conduits (31A'), connected to the upper portion of the gas return circuit (30), arranged around the upper halve of the processing region (12); and
lower outer return conduits (31A"), connected to the lower portion of the gas return circuit (30), arranged around the lower halve of the processing region (12); and
the inner return conduits (31B) comprise:
upper inner return conduits (31B'), connected to the lower portion of the gas return circuit (30), contained in a hollow space surrounded by the upper halve of the processing region (12); and
lower outer return conduits (31B"), connected to the lower portion of the gas return circuit (30) contained in a hollow space surrounded by the lower halve of the processing region (12).

12. The apparatus according to claim 10 or 11 wherein
the upper outer impulsion conduits (21A') and the upper inner impulsion conduits (21B') are connected to the upper portion of the gas impulsion circuit (20) through an upper impulsion manifold located above the processing region (12);
the lower outer impulsion conduits (21A") and the lower inner impulsion conduits (21B") are connected to the lower portion of the gas impulsion circuit (20) through a lower impulsion manifold located below the processing region (12); and/or
the upper outer return conduits (31A') and the upper inner return conduits (31B') are connected to the upper portion of the gas return circuit (30) through an upper return manifold located above the processing region (12);
the lower outer return conduits (31A") and the lower inner return conduits (31B") are connected to the lower portion of the gas return circuit (20) through a lower return manifold located below the processing region (12).

13. The apparatus according to any preceding claim wherein the gas inlets (32) of the inner return conduits (31B) are facing outwards towards the interspaces of the at least one first portion of the processing region (12); and the gas inlets (32) of the outer return conduits (31B) are facing inwards towards the interspaces of the at least one second portion of the processing region (12).

14. The apparatus according to any preceding claim wherein the gas treatment unit includes a gas heater, a gas cooler, a gas dryer, a gas humidifier, a gas heat exchanger, a smoke generator or any combination thereof.

15. The apparatus according to any preceding claim wherein the at least one gas treatment unit (40) is located above the processing region (12).
